# EUROPEAN PATENT APPLICATION

(11) **EP 4 711 207 A1**
(43) Date of publication of application: **18.03.2026**
(21) Application number: 24200508.0
(22) Date of filing: 16.09.2024
(51) Int. Cl.: B60R 1/072, B60R 1/074

(54) **ACTUATOR FOR REAR VIEW DEVICE**

(71) Applicant: Motherson Innovations Deutschland GmbH, 70327 Stuttgart (DE)
(72) Inventor: Lee, YoungMin, 14556 Bucheon (KR); Woo, HeeSung, 14556 Bucheon (KR); Yu, IlSung, 14556 Bucheon (KR); Yun, SeungTae, 14556 Bucheon (KR); Park, DongMyeong, Portchester, PO169SD (GB)

(57) **Abstract**

An actuator 100 for a rear-view device 10 of a vehicle 1. A lower housing 120 comprising at least one operating region 128, wherein the at least one operating region 128 is defined between at least one side wall 125 and an inner surface 124 of the lower housing 120; and at least one drive gear 150a, 150b configured to be operated in the at least one operating region 128, wherein the at least one drive gear 150a, 150b having at least one side surface 600a, 600b. At least one rib 200a, 200b, 300a, 300b adapted on at least one of: the at least one side surface 600a, 600b of the at least one drive gear 150a, 150b, the at least one side wall 125 of the lower housing 120, or the inner surface 124 of the lower housing 120, wherein the at least one ribs 200a, 200b, 300a, 300b adapted to provide at least partial contact between the at least one drive gear 150a, 150b and the at least side wall 125 of the lower housing 120, or between the at least one drive gear 150a, 150b and the inner surface 124 of the lower housing 120.

## Description

The present disclosure relates to an actuator intended for a rearview device of a vehicle in accordance with the preamble of claim 1. Further, the present disclosure relates to a rearview device comprising an actuator. Furthermore, the present disclosure relates to a vehicle having a rearview device configured with the actuator.

A rearview device, such as an exterior mirror of the vehicle, may provide a side or rear view for the driver. In specific driving situations, for example in a situation such as parking, the driver must be able to look not only in the lateral or reverse direction of the vehicle, but also in the downward direction of the vehicle. In addition, it is necessary to provide different viewing angles depending on the driver or driving situation.

In order to provide a view in different directions, a rearview element attached to the rearview device or the rearview device as such may be pivotable. The rearview device may comprise an actuator that pivots the rearview device and/or the rearview element, such as a mirror element, a display unit, or a camera device.

The drive mechanism for driving an actuator may comprise a drive motor and a gear structure operated by receiving power from the drive motor. In particular, a drive mechanism comprising a rack for a pivoting operation may require structure that stably supports the rack and limits a friction of the rack to avoid durability and malfunctions of the actuator. The rack often experiences friction from the adjoining walls or the inner surface of the lower housing during the tilting process, which leads to a malfunction of the drive mechanism.

US10,076,999B2 discloses a movement mechanism comprising a substantially spherical holder and a substantially cup-shaped ring which, when inserted into each other, are rotatable relative to each other about a first axis, a first axis lying in a plane substantially parallel to the top of the holder and a second axis, the second axis lying in a plane that is the same as or parallel to the top of the ring, and wherein the second axis is at an angle of about 90 ° to the first axis, while drive means are provided to permit movement of the holder relative to the ring, the drive means comprising a first non-linear drive rod, means for activating said first non-linear drive rod, and a second non-linear drive rod supported in said holder, and means for activating said second non-linear drive rod. Furthermore, the first non-linear drive rod and the second non-linear drive rod are rotatable about third and fourth axes, respectively, wherein the third and fourth axes are parallel to each other and lie in a plane that is the same as or parallel to the top of the holder, and wherein the third and fourth axes coincide with the first axis.

US6,929,374B2 discloses a movement mechanism comprising a substantially spherical holder and a substantially cup-shaped ring, which, when inserted into each other, are rotatable relative to each other about at least a first axis lying in a plane, while drive means are provided to permit movement of the holder relative to the ring, the drive means comprising a non-linear drive rod supported in the holder and means for activating the drive rod to move the holder relative to the ring, characterised in that the drive rod is in the form of a ring segment and is connected to a drive member rotatably mounted in a recess in the ring relative to a second axis, the second axis lying in a plane that is the same as or parallel to the top of the ring, and wherein the second axis is at an angle of about 90° to the first axis, wherein the ring segment is rotatable about a third axis that lies in a plane that is the same as or parallel to the top of the holder and that lies at an angle of about 45° to the first axis.

US2013/0208373A1 discloses a mirror device for a vehicle, comprising a mirror provided on a vehicle; a rotary element on which the mirror is held; a holding element, on which the rotating member is rotatably supported, the rotating member being rotated to adjust a mirror surface angle of the mirror; a sliding portion provided on either the rotating member or the support member; and a protruding portion provided protruding from the other of the rotating member or the holding member, the sliding portion is configured to face a rotational direction of the rotating member with respect to a direction orthogonal to the rotational direction of the rotating member, and the sliding portion slides on the protruding portion when the rotating member is rotated.

US2021/0261052A1 relates to a stationary element, a movable element, a holding element and a drive element. The stationary element has a spherical surface on the stationary side. The movable element has a spherical surface on the movement side. The spherical surface of the stationary side and the spherical surface of the movable side together form a gap. Between the stationary spherical surface and the movable spherical surface there is a sealing means which seals the gap. As a result, the present invention enables smooth adjustment of an angle of a mirror surface and prevents the penetration of water into the interior.

US2011/0194202A1 discloses a vehicle mirror device comprising a mirror provided on a vehicle; a pivoting element holding the mirror; a sliding part provided on the pivoting element; a support member pivotally supporting the pivot member, thereby adjusting an angle of a mirror surface of the mirror; and a pivot surface provided on the support member. The sliding part is slidable on the pivot surface, while a gap is provided between an edge of the holding member on a side of the pivot member and the pivot member in a radial pivot direction of the pivot member.

In view of the aforementioned and other disadvantages of the prior art, the object of the present disclosure is to further develop the known actuator in order to overcome at least some of these disadvantages. In particular, the object is to provide an actuator which has a drive mechanism which is capable of stably supporting the movement of the drive gear and reducing the friction between the drive gear part and other components, in particular a lower housing or side walls configured with the lower housing, during operation of the actuator.

This object is achieved according to the present disclosure by the features of the characterizing part of claim. Preferred embodiments of the actuator according to the invention are described in claims to.

Further aspects, advantages, and outstanding properties of the present disclosure will be apparent to those skilled in the art from the following detailed description, which, together with the appended drawings, discloses exemplary embodiments of the disclosure, wherein:
FIG. 1 shows an embodiment of an exterior rear-view mirror mounted on a vehicle, according to an embodiment;
FIG. 2 illustrates a rear-view element mounted on the exterior rear-view mirror, in accordance with an embodiment;
FIG. 3 illustrates a perspective view of the actuator, according to another embodiment;
FIG. 4 illustrates a top view of the actuator in accordance with another embodiment;
FIG. 5 shows an exploded perspective view of the actuator, according to another embodiment;
FIG. 6 illustrates a drive mechanism on a first side in a perspective view, according to an embodiment;
FIG. 7 illustrates a drive mechanism on a second side in a perspective view, according to another embodiment;
FIG. 8 illustrates a drive gear part and a clutch gear, according to an embodiments;
FIG. 9a illustrates exploded view of a first and a second drive gear disposed in an operating region in a lower housing, according to another embodiment;
FIG. 9b illustrates the first and the second drive gear disposed in an operating region in a lower housing, according to another embodiment;
FIG. 9c illustrates a cross-sectional view of the first drive gear taken along a line B-B', according to same embodiment described in FIG. 9a;
FIG. 9d illustration a cross-sectional view of the first drive gear taken along a line A-A', according to same embodiment described in FIG. 9a;
FIG. 10a illustrates the first and the second drive gear disposed in the operating region in the lower housing, according to another embodiment;
FIG. 10b illustrates a cross-sectional view of the first drive gear taken along the line A-A', according to another embodiments; and
FIG. 10c illustrates the first and second drive gears along with the ribs on side surfaces, according to another embodiment as described in FIG. 10a.

The aforementioned objects, features, and advantages of the present disclosure will become more apparent from the following detailed description taken in conjunction with the accompanying drawings. However, various modifications may be made to the present disclosure, and the present disclosure may include various embodiments of the present disclosure. Hereinafter, specific embodiments of the present disclosure illustrated in the drawings will be described in detail.

In the drawings, the thicknesses of the layers and regions may be exaggerated for clarity. When it is indicated that an element or layer is "on top of" another element or layer, this includes both a case where another layer or element is sandwiched therebetween and a case where the element or layer is directly over the other element or layer. In principle, the same reference numbers designate the same elements throughout the specification. In the following description, like reference numerals are used to designate elements having the same function for each embodiment of the present disclosure within the same concept illustrated in the drawings.

If a detailed description of known functions or configurations associated with the present disclosure would unnecessarily obscure the core of the disclosure, a detailed description will be omitted. Also, the numerals used in the present description (e.g., first, second, etc.) are only identifiers for distinguishing one element from another.

In addition, the terms "module" and "unit" referring to elements in the following description are given or used in combination only for the sake of simplicity of writing the specification, and the terms themselves have no different meanings or roles.

Moreover, the use of a singular, such as "on", is not to be understood as a limitation of the number of components or details of certain components. Additionally, various terms and/or expressions describing or indicating a position or directional reference, such as "top", "bottom", "front", "back", "forward", "back", "end", "outside", "inside", "left", "right", "vertical", "horizontal", etc., may refer to one or more particular components, as generally seen from a user's view during use or operation, and such terms and/or expressions are not to be understood as limiting, but merely as a representative basis for describing the disclosure for a person skilled in the art. In addition, the suffixes "region", "part", "unit" for a component which is used in the following description are indicated or mixed in only with a view to simplifying the writing of the specification and have no meanings or roles which differ from one another.

The present disclosure relates to an actuator, preferably for pivoting a rearview device (such as a vehicle exterior mirror) and/or a rearview element (such as a mirror element and/or a camera device and/or a display unit) and a rearview device comprising such an actuator.

Hereinafter, an actuator according to an embodiment of the present disclosure will be generally described.

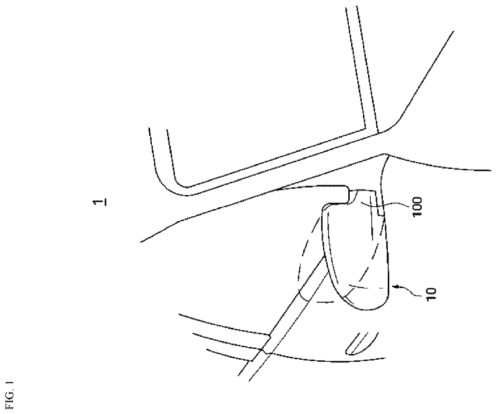

FIG. 1 illustrates a rearview device 10 in form of an exterior mirror 10 mounted on a vehicle 1, according to an embodiment of the present disclosure.

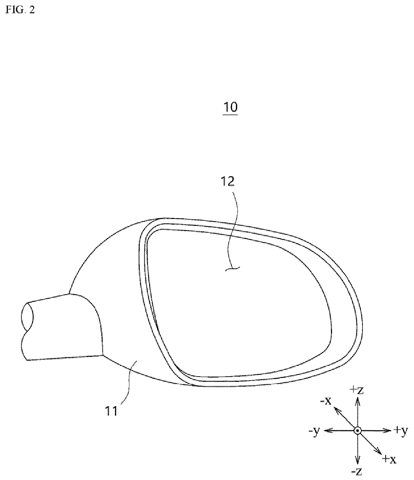

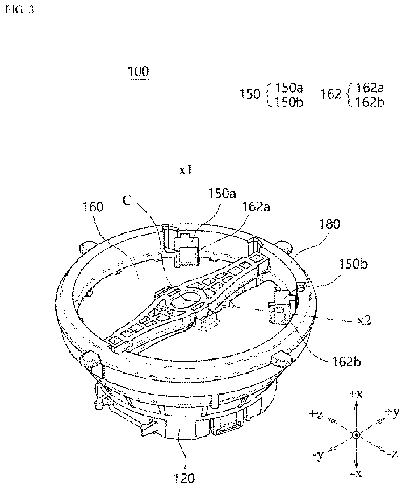

The actuator 100 (refer FIG. 3) according to an embodiment of the present disclosure may be mounted to the rearview device 10 according to the present disclosure, in particular to an exterior mirror 10 disposed outside the vehicle 1. Referring to FIG. 2, the rear-view device 10 is an exterior mirror, which can comprise a rear-view element 12 in the form of a mirror element, which provides the driver with a rear view. Furthermore, the exterior mirror 10 may comprise a housing 11 in which the rearview element is accommodated. For example, the rearview element can be at least one mirror element, alternatively, the rear-view element 12 may be realized as a display that outputs an image obtained by photographing a peripheral region of the vehicle 1, or a camera device, or a combination of all der. In order to simplify the present description, however, embodiments in which the rear-view element is realized as a mirror element are mainly described below.

In the present disclosure, to simplify the description, an exterior mirror 10 for a vehicle 1 is described. However, the exterior mirror 10 in the present disclosure is not limited to vehicles 1, may be applied to various transport devices such as a two-wheeler (e.g., a motorcycle).

According to various embodiments of the present disclosure, the actuator 100 may be mounted in the exterior mirror 10 for the vehicle 1 to perform an operation to pivot the exterior mirror 10 and/or the rearview element 12 for the vehicle 1. The actuator 100 may, for example, be housed in the housing 11 of the exterior mirror 10 to provide power for pivoting the rearview element 12 mounted to the exterior mirror 10.

Referring again to FIG. 1 and FIG. 2, the actuator 100 may be operated to pivot the rearview member 12 in all directions with respect to a surface on which the rearview member 12 is disposed. If, for example, the rear-view element is inclined parallel to the z-y axis in the initial state, the actuator can rotate the rear-view element with respect to all axes, that is to say the y axis, the x axis and the z axis.

In the following description of the present disclosure, unless specifically mentioned, the -x-axis direction may refer to the traveling direction of the vehicle 1. The x-axis direction may refer, for example, to the rear of the vehicle 1. Additionally, the y-axis direction may refer to a lateral direction of the vehicle 1. For example, the +y axis direction may refer to a right direction of the vehicle 1 and the -y axis direction may refer to a left direction of the vehicle 1. in addition, the z axis direction may refer to an upper or lower direction of the vehicle 1. For example, the -z-axis direction may refer to a lower direction of the vehicle 1, and the +z-axis direction may refer to an upper direction of the vehicle 1.

FIGS. 3-5 illustrate different views of the actuator 100, according to the present disclosure with respect to various embodiments.

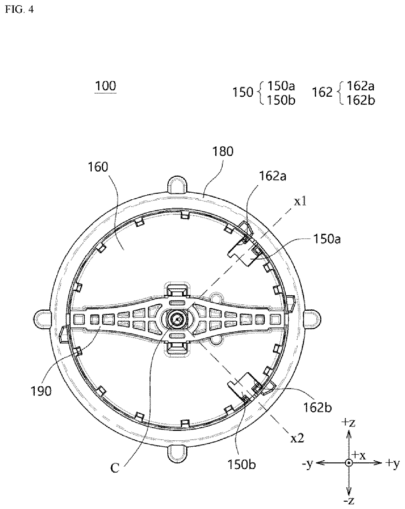

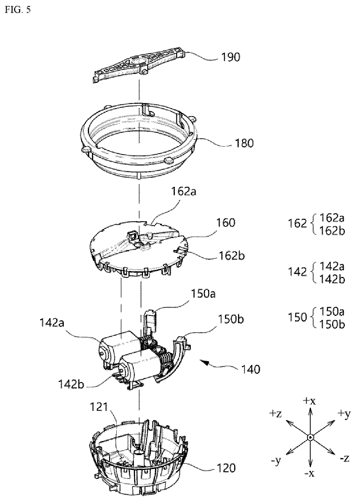

FIG. 3 shows a perspective view of the actuator 100, according to the present disclosure according to an embodiment. FIG. 4 shows a top view of the actuator 100, according to the present disclosure according to another embodiment. FIG. 5 shows an exploded perspective view of the actuator 100, according to the present disclosure according to still another embodiment.

Referring to FIGS. 3-5, the actuator 100 may comprise all or part of the lower housing 120 with the drive mechanism 140 housed within the lower housing 120, the upper cover 160 at least partially shielding the lower housing 120, the holder 180 is adapted to surround at least a portion of the lower housing 120, and the connector 190 is connected to the holder 180 and is configured to be operated by receiving power from the drive mechanism 140. The actuator 100 of the embodiments of FIGS. 3 to 5 may have a configuration that is the same as or similar to that of the actuator 100 of the embodiments of FIGS. 1 and 2.

According to an embodiment of the present disclosure, the lower housing 120 may provide a space in which the drive mechanism 140 may be housed. For example, the lower housing 120 may have a shell shape in which a storage space 121 is formed, and the drive mechanism 140 may be disposed in the storage space 121. In an embodiment of the present disclosure, the lower housing 120 may be formed such that a width of a top side (+x-axis direction) is greater than a width of a bottom side (-x-axis direction).

According to an embodiment, the drive mechanism 140 may include a drive motor 142 and a drive gear portion 150. In one embodiment of the present disclosure, the drive motor 142 may comprise first and second drive motors 142a and 142b. However, it will be appreciated that the illustrated embodiments are exemplary and may also comprise fewer or more drive motors. In one embodiment of the present disclosure, the drive motor 142 may be powered for operation by an external power source (e.g., an internal power source of the vehicle 1 of 1).

In another embodiment, the drive mechanism 140 may include a drive gear portion 150 that operates to pivot the rearview element 12 (e.g., the rearview element 12 of 2). For example, the drive gear part 150 may comprise a first drive gear part 150a and a second drive gear part 150b. The first drive gear part 150a may be operated by receiving power from the first drive motor 142a, and the second drive gear part 150b may be operated by receiving power from the second drive motor 142b. The first drive gear part 150a and the second drive gear part 150b are symmetrical to each other, and unless specifically mentioned, the description of the first drive gear part 150a can also be applied to the second drive gear part 150b. For the sake of simplicity, mainly the operation of the first drive gear part will be described below.

According to an embodiment, the upper cover 160 may be disposed on the upper part of the lower housing 120 and shield the accommodation space 121. In another embodiment of the present disclosure, the upper cover 160 may include an opening area 162 to provide a path of travel for the drive gear portion 150. The opening region 162 may comprise, for example, a first opening region 162a through which the first drive gear part 150a passes and a second opening region 162b through which the second drive gear part 150b passes.

According to an embodiment, the holder 180 may be adapted to at least partially surround the outer surface of the lower housing 120. In one embodiment of the present disclosure, the holder 180 may have an annular shape. In an embodiment of the present disclosure, when the holder 180 is viewed from the side surface (e.g., y-axis direction or z-axis direction), the width of the bottom side (-x-axis direction) may be formed to be less than the width of the top side (+x-axis direction). For example, when viewed from a side surface (e.g., y-axis direction or z-axis direction), the holder 180 and the lower housing 120 may have a corresponding shape. In one embodiment of the present disclosure, a width (or diameter) of a portion (e.g., an upper portion (+x-axis direction) of the holder 180 in the horizontal direction (y-axis or z-axis) may be greater than the width of the widest horizontal direction (y-axis or z-axis) of the lower housing 120. of a lower portion (-x-axis direction)) of the holder 180 in the horizontal direction (y-axis or z-axis) is smaller than the width of at least a portion of the upper portion (+x-axis direction) of the lower housing 120. accordingly, such that the lower housing 120 is separated in the lower vertical direction (-x-axis direction) of the holder 180.

In another embodiment, the holder 180 may be operatively connected to the drive gear portion 150. For example, the holder 180 may be connected to the first drive gear portion 150a and the second drive gear portion 150b and may be pivoted with respect to the horizontal plane (e.g., the y-z plane, for example, the surface of the rearview element 12) in accordance with the operation of the first drive gear portion 150a and the second drive gear portion 150 b. Since the first drive gear part 150a and the second drive gear part 150b are arranged at right angles to each other, the holder 180 can be pivoted in all directions with respect to the horizontal plane (y-z plane). In one embodiment of the present disclosure, the holder 180 may be connected to the rearview element (e.g., the rearview element of 2), and the rearview element may be pivoted according to the operation of the holder 180.

In an embodiment, the connecting member 190 may be operatively connected between the upper cover 160 and the retainer 180. For example, a central portion of the link 190 may be pivotally connected to a central portion of the upper cover 160, and both edges of the link 190 may be connected to the bracket 180. Since a portion of the connecting member 190 (for example, a middle portion connected to the upper cover 160) is supported by the upper cover 160, the bracket 180 can be stably pivoted.

In an embodiment, the first drive gear part 150a and the second drive gear part 150b may be adapted to form a certain angle with respect to a horizontal surface (e.g., a z-y plane) of a top portion of the holder 180. Since the rearview element 12 (e.g., the rearview element 12 of 2) is disposed above the holder 180, the z-y plane may refer to a surface that is parallel to the surface of the rearview element 12. For example, the particular angle may be approximately a right angle. As another example, according to an embodiment of the present disclosure, an angle formed by the axis x1 extending from the center c of the widthwise plane (z-y plane) of the actuator 100 to an end of the first drive gear part 150a may be and the axis x2 extending from the center c to an end of the first drive gear part 150a of the second drive gear part 150b is represented as a right angle. As will be described later, the first drive gear part 150a may rotate about a direction parallel to the x2 axis and the second drive gear part 150b may rotate about a direction parallel to the x1 axis. For example, the x1 axis may be the same axis as the y-axis and the x2 axis may be the same axis as the z-axis. As another example, according to an embodiment of the present disclosure, the x1 axis may be the same axis as the z-axis and the x2 axis may be the same axis as the y-axis.

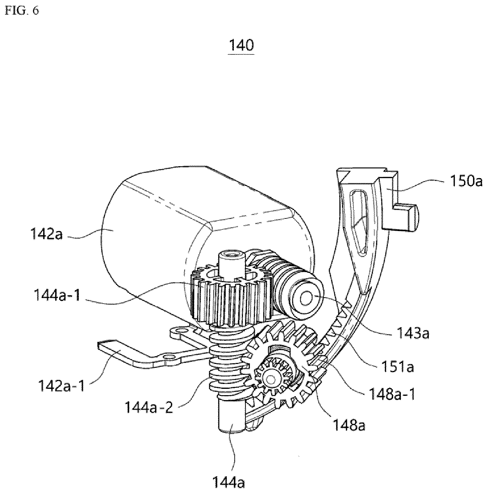

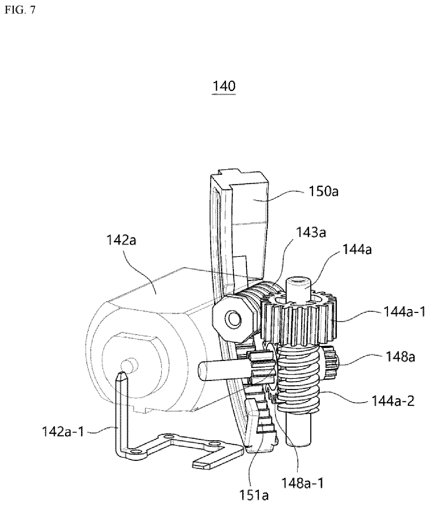

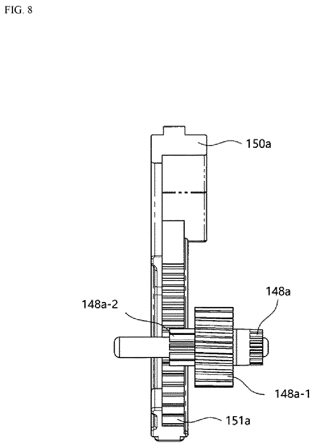

FIGS. 6-8 illustrate various embodiments of a drive mechanism according to the present invention. FIG. 6 illustrates a drive mechanism 140 according to the present invention on a first side according to an embodiment; FIG. 7 illustrates a drive mechanism 140 according to the present invention on a second side according to another embodiment; FIG. 8 illustrates a drive gear part 150 and a clutch gear 148 according to another embodiment.

Referring to the embodiments of FIGS. 6-8, the drive mechanism 140 may comprise at least some of a first drive motor 142a, a first gear 144a, a first clutch gear 148a, and a first drive gear 150a. In other words, the drive mechanism 140 may comprise a first drive mechanism 140 a (a drive mechanism associated with the first drive motor 142a) and a second drive mechanism 140b (e.g., a drive mechanism associated with the second drive motor 142b). The description of the drive mechanism 140 (e.g., the drive mechanism 140 of FIG. 5) in the above-described embodiments of the present disclosure may be applied to the drive mechanism 140 from FIGS. 6 to 8.

According to an embodiment, the first drive motor 142a may include a first port 142a-1 and a first transfer gear 143a. The first terminal 142a-1 may be electrically connected to the exterior of the first drive motor 142a (e.g., internal power supply of the vehicle 1) to receive power to operate the first drive motor 142a. In another embodiment of the present disclosure, the first terminal 142a-1 may be connected to another terminal or circuit board disposed in the lower housing 120 (e.g., the lower housing 120 of FIG. 5), or may be connected to another terminal external to the lower housing 120. The first transfer gear 143a may transfer the power of the first drive motor 142a to other components.

According to an embodiment, the first gear 144a may be connected to the first transfer gear 143a. Additionally, the first gear 144a may be connected to the first clutch gear 148a. In other words, the first gear 144a may connect the first transfer gear 143a and the first clutch gear 148a. In another embodiment of the present disclosure, the first gear 144a may include a first gear part 144a-1 for connecting to the first transfer gear 143a and a second gear part 144a-2 for connecting to the first clutch gear 148a. In still another embodiment of the present disclosure, the first gear part 144a-1 and the second gear part 144a-2 may transmit power in different directions or in the same direction. For example, the first gear part 144a-1 may be provided as a spur gear or as a helical gear, and the second gear part 144a-2 may be provided as a worm gear.

In an embodiment, the first clutch gear 148a may include a first member 148a-1 for receiving power from the first gear 144a and a second member 148a-2 for engaging at least a portion of the first drive gear 150a. In an embodiment of the present disclosure, the first gear part 148a-1 may be provided as a spur gear or as a helical gear to engage the second gear part 148a-2. Additionally, the second part 148a-2 may be provided as a pinion gear to engage the first drive gear part 150a. In another embodiment of the present disclosure, the first part 148a-1 and the second part 148a-2 may share the same axis but have different diameters. For example, the second part 148a-2 provided as a pinion gear may have a smaller diameter than the first part 148a-1.

According to an embodiment, the first drive gear part 150a may include a first drive region 151a to be engaged with the second part 148a-2. In an embodiment of the present disclosure, the first drive region 151a may be provided as a rack. In addition, the first drive gear part 150a may have a smoothly curved shape. For example, the first drive gear part 150a may be arcuate. Since the first drive gear part 150a is arcuate, the first drive gear part 15 a can smoothly rotate based on the center axis of the arc (e.g., the x2 axis of FIG. 4), in accordance with the operation of the second part 148a-2. Additionally, as described below, the first drive gear part 150a may move along an inner surface 124 of the lower housing 120. For this purpose, the shape of the outer surface of the first drive gear part 150a and the shape of the inner surface 124 of the lower housing 120 may correspond to each other. For example, the curvature of the outer surface of the first drive gear portion 150a may be substantially the same as the curvature of the inner surface 124 of the lower housing 120.

In the above description and the following description of the present disclosure, mainly the first drive gear part 150a and various components for driving the first drive gear part 150a (e.g., the first drive motor 142a, the first gear wheel 144a, and the first clutch gear wheel 148a) will be described. As described above, this description may equally (or symmetrically) be applied to the second drive gear part 150b and the components for driving the second drive gear part 150 b. That is, it is understood that the drive mechanism 140 may comprise all or some of a second drive gear part 150b (e.g., the second drive gear part 150b of FIG. 4) and components for driving it (e.g., the second drive motor 142b, the second gear 144b, and the second clutch gear 148 b), similar to the first drive gear part 150a.

In an embodiment, it is necessary to stably provide movement to the first drive gear part 150a or smoothen motion of the first drive gear part 150a during operation of the first drive gear part 150a, since the first drive gear part 150a is required to move as compared to other components forming the drive mechanism 140 and engaged with each other. Thus, it is required to provide minimum friction to the first drive gear part 150a while the movement of the actuator 200.

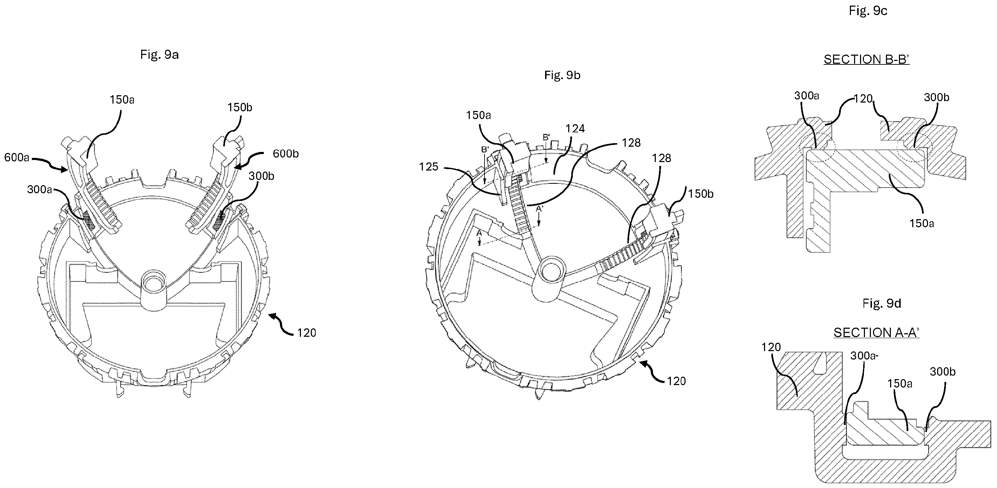

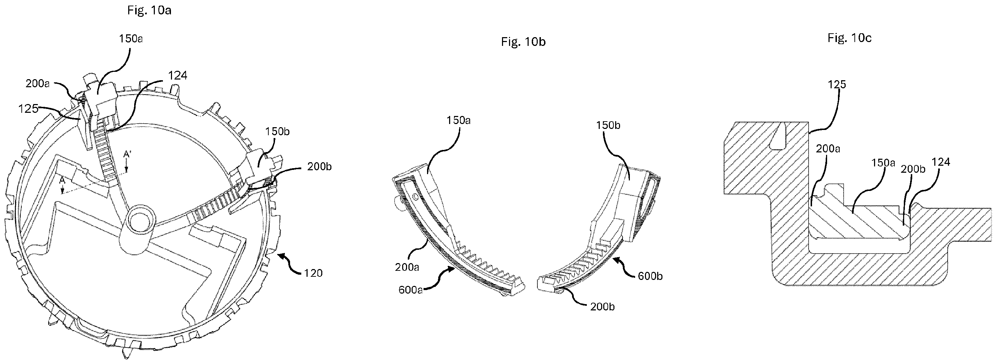

FIGS. 9a-d illustrate, in an embodiment, at least one drive gears 150a, 150b being disposed in a lower housing 120, wherein the lower housing 120 is configured with at least one ribs 200a, 200b. The lower housing 120 may include an operating region 128 in which the at least one drive gear part (150a, 150b) may be disposed. Although, for the sake of simplicity, the following description describes mainly the arrangement relationship between the first drive gear part 150a and the operating region 128, characterized in that the same description can be applied similarly (or symmetrically) to the arrangement relationship between the second drive gear part 150a and the operating region 128. The description of the first drive gear part 150a and the lower housing 120 described with reference to FIGS. 3 to 5 may also be applied to the first drive gear part 150a and the lower housing 120 of FIGS. 9a-d and FIGS. 10a-c.

According to an embodiment of the present invention, the first drive gear part 150a may move within the operating region 128 with a specific range. For example, the first drive gear part 150a may rotate about the x2 axis (refer Fig. 4) within the operating region 128. Although only the first drive gear part 150a is illustrated in the drawing, it will be appreciated that the first drive gear part 150a can be operated by the configurations described above with reference to the FIGS. 6 to 8.

In accordance with an embodiment of the present invention, the lower housing 120 may include the operating region 128, where the operating region 128 may be concaved shaped, to define an operating range of the first drive gear portion 150a. For example, the operating region 128 may be formed in at least a portion of the inner surface 124 of the lower housing 120 and may be formed the central region of the lower housing 120 which is concavely shaped, when the lower housing 120 is viewed from above (when viewed in the -x-axis direction). In another embodiment, the operating region 128 is defined between at least one side wall 125 and an inner surface 124 of the lower housing 120. Further, the lower housing 120 may include an accommodation space 121 formed in the interior, which is preferably a shell-shaped structure. The at least one drive gear 150a, 150b having at least one side surface 600a, 600b. In this embodiment, at least one rib 200a, 200b may be adapted on the inner surface 124 of the lower housing 120 or side walls of the lower housing 120. In another embodiment, a first rib 200a may be adapted on the inner surface of the lower housing 120 and a second rib 200b may be adapted on the at least one side wall 125 of the lower housing 120. In an embodiment, the at least one ribs 200a, 200b may be adapted to provide a contact between the at least one drive gear 150a, 150b and the at least side wall 125 of the lower housing 120. In another embodiment, the at least one ribs 200a, 200b may be adapted to provide a contact between the at least one drive gear 150a, 150b and the inner surface of the lower housing 120. These ribs 200a, 200b ensure reduction of friction between the at least one drive gear 150a, 150b and the side wall 125 or the inner surface 124 of the housing 120.

In an embodiment, the at least one drive gear 150a, 150b is concurrent with the side surface 600a, 600b of the at least one drive gear 150a, 150b. For example, the side surface 600a, 600b is concavely shaped like the lower housing 120 which is also shaped concavely.

FIGS. 10a-c illustrate the first 150a and the second 150b drive gear disposed in the operating region in the lower housing, wherein the first 150a and second 150b drive gears configured with the ribs 300a, 300b on the side surfaces 600a, 600b, in accordance with a second embodiment of the present invention. FIG. 10c illustrates a cross-sectional view of the first drive gear 150a taken along the line A-A', according to various embodiments. FIG. 10b illustrates the first 150a and second 150b drive gears along with the ribs 300a, 300b on side surfaces 600a, 600b, according to same embodiment as described in FIG. 10a. The at least one drive gear 150a, 150b having at least one side surface 600a, 600b. In this embodiment, at least one rib 200a, 200b may be adapted on the at least one side surface 600a, 600b of the at least one drive gear 150a, 150b. For example, the first side surface 600a may be a left-side surface on which a first rib 200a is adapted and the second side surface 600b may be a right-side surface on which a second rib 200b is adapted. In an embodiment, the at least one ribs 200a, 200b may be adapted to provide a contact between the at least one drive gear 150a, 150b and the at least side wall 125 of the lower housing 120. In another embodiment, the at least one ribs 200a, 200b may be adapted to provide a contact between the at least one drive gear 150a, 150b and the inner surface of the lower housing 120. These ribs 200a, 200b ensure reduction of friction between the at least one drive gear 150a, 150b and the side wall 125 or the inner surface 124of the housing 120. Similar to above first embodiment, the at least one ribs 300a, 300b are adapted to provide at least partial contact between anyone of the at least one drive gear 150a, 150b and the at least side wall 125 of the lower housing 120, or the at least one drive gear 150a, 150b and the inner surface 124 of the lower housing 120. These ribs 300a, 300b ensure reduction of friction between the at least one drive gear 150a, 150b and the side wall 125 or the inner surface 124 of the housing 120.

As described above, although the embodiments are described by the limited embodiments and the drawings, various modifications and changes may be made by those skilled in the art based on the above description. For example, suitable results can also be achieved when the described techniques are performed in a different order than the described method and/or components of the described system, the structure, the device, the circuit, etc., or are combined in a form other than the described method or are replaced or replaced by other components or equivalents. Therefore, other implementations, other embodiments of the present disclosure, and those equivalent to the claims, also fall within the claims to be described below.

### Reference number

1 Vehicle
10 Exterior mirror
11 Housing
12 Rear view element
100 Actuator
120 Lower housing
121 Accommodation space
122 Outer surface
124 Inner surface
125 Side wall
126 Floor surface
127 Second boundary region
128 Operating region
140 Drive mechanism
142 Drive motor
142a, 142b First, second drive motor
142a1 First terminal
143 Transmission gear
143a, 143b First, second transmission gear
144a, 144b First, second gear
144a-1, 144a-2 First, second gear part
148 Clutch gear
148a, 148b First, second clutch gear
148a-1, 148a-2 First, second part
150 Drive gear part
150a, 150b First, second drive gear part
151a, 151b First, second drive range
160 Upper cover
162 Opening area
162a, 162b First, second opening area
180 Holder
190 Connecting element
200a, 200b, 300a, 300b Ribs
600a. 600b side surface

## Claims

1. An actuator (100) for a rear-view device (10) of a vehicle (1), comprising:
a lower housing (120) comprising at least one operating region (128), wherein the at least one operating region (128) is defined between at least one side wall (125) and an inner surface (124) of the lower housing (120); and
at least one drive gear (150a, 150b) configured to be operated in the at least one operating region (128), wherein the at least one drive gear (150a, 150b) having at least one side surface (600a, 600b);
**characterized in that**
at least one rib (200a, 200b, 300a, 300b) adapted on at least one of: the at least one side surface (600a, 600b) of the at least one drive gear (150a, 150b), the at least one side wall (125) of the lower housing (120), or the inner surface (124) of the lower housing (120), wherein the at least one ribs (200a, 200b, 300a, 300b) adapted to provide at least partial contact between anyone of the at least one drive gear (150a, 150b) and the at least side wall (125) of the lower housing (120), or the at least one drive gear (150a, 150b) and the inner surface (124) of the lower housing (120).

2. The actuator (100) according to claim 1, wherein the operating region (128) is formed in at least a portion of the inner surface (124) of the lower housing (120), preferably being formed in the vicinity of the central region of the lower housing (120); and/or the lower housing (120) has an accommodation space (121) formed in the interior, which is preferably shell-shaped.

3. The actuator (100) according to claim 1, wherein the at least one drive gear (150a, 150b) is curved shaped and/or the at least one ribs (200a, 200b) disposed on the at least one drive gear (150a, 150b) is concurrent with the side surface (600a, 600b) of the at least one drive gear (150a, 150b).

4. The actuator (100) according to claim 1, wherein the at least one ribs (300a, 300b) adapted on the inner surface (124) of the lower housing (120), wherein shape of the at least one ribs (300a, 300b) corresponds to the shape of inner surface (124) of the lower housing (120).

5. The actuator (100) according to claim 1, wherein the at least one rib (200a, 200b) disposed on the at least one drive gear (150a, 150b) is configured to make a point contact with the at least side wall (125) of the lower housing (120) or the inner surface of the lower housing (120).

6. The actuator (100) according to claim 1, wherein the at least one ribs (200a, 200b, 300a, 300b) adapted with a curved or a circular cross section.

7. The actuator according to claim 4, wherein at least a portion of the drive gear portion (150a, 150b) is operatively engaged with the clutch gear (148a, 148b) such that at least a portion (148a-1, 148a-2) of the clutch gear (148a, 148b) is engaged with at least one drive portion (151a, 151b).

8. The actuator (100) according to one of the preceding claims, wherein the drive gear (150 a, 150 b) is configured to move rotationally along a part of an interior of the lower housing (120); and/or a holder (180) is connected to the drive gear (150a, 150 b) for operation, wherein it is preferably configured to at least partially cover the upper cover (160).

9. The actuator (100) according to one of Claims 1 to 8, wherein a clutch gearwheel (148 a, 148 b) is arranged above the drive gear (150a, 150b); and/or the lower housing (120) comprises the operating region (128) in which the drive gear (150a, 150b) is arranged, wherein preferably the drive gear (150a, 150b) moves within the operating region (128) with a specific range.

10. Rear view device (10) for a vehicle (1), comprising at least one actuator (100) according to one of the preceding claims.

11. Rear view device according to claim 10, wherein the rear-view device comprising a housing (11); and at least one rear view element (12), which preferably comprises at least one mirror, a display unit and/or a camera device.

12. A vehicle (1) comprising the actuator (100) claimed in any of claims 1 to 8.
